# EUROPÄISCHE PATENTSCHRIFT

(11) **EP 0 820 504 B1**
(45) Veröffentlichungstag und Bekanntmachung des Hinweises auf die Patenterteilung: **26.04.2000**
(21) Anmeldenummer: 96908077.9
(22) Anmeldetag: 20.03.1996
(51) Int. Cl.: C12C 13/00

(54) **BRAUEREIANLAGE**
BREWERY INSTALLATION
INSTALLATION POUR BRASSERIE

(30) Priorität: 13.04.1995 DE 19514034
(43) Veröffentlichungstag der Anmeldung: 28.01.1998
(73) Patentinhaber: Roehr, Wolfgang, 22609 Hamburg (DE)
(72) Erfinder: Roehr, Wolfgang, 22609 Hamburg (DE)
(74) Vertreter: Graalfs, Edo, Dipl.-Ing. Patentanwälte Hauck, Graalfs, Wehnert, Döring, Siemons
(86) Internationale Anmeldenummer: EP9601187
(87) Internationale Veröffentlichungsnummer: WO9632466

(56) Entgegenhaltungen:
- EP-A- 0 087 139
- DE-A- 3 640 811

## Beschreibung

Die Erfindung bezieht sich auf eine Brauereianlage, insbesondere kleintechnische Anlage, nach dem Patentanspruch 1.

Kleintechnische Brauereianlagen werden wie großtechnische Anlagen erstellt, wobei die einzelnen Geräte und Einrichtungen in einem Gebäude montiert und verrohrt werden. Aus der EP 0 087 139 ist ferner bekanntgeworden, die Wasseraufbereitung, das Sudwerk, Gär- und Lagertanks sowie sonstige für die Bierbereitung erforderliche Einrichtungen in geschlossenen, jedoch begehbaren Containern fest zu montieren und zu verrohren, wobei die die Anlagenteile enthaltenden Container aneinander anschließbar sind. Durch die Unterbringung von Anlagenteilen in Containern kann die gesamte Brauereianlage an einem beliebigen für die Brauerei vorgesehenen Standort aufgestellt werden, wobei lediglich die angelieferten Container aneinander angeschlossen zu werden brauchen, um die Brauereianlage im wesentlichen betriebsbereit zu machen.

Die Erstellung und der Betrieb von Brauereianlagen kann auf eine Reihe von Schwierigkeiten stoßen, insbesondere an Orten, an denen Grundstücke schwer zu erwerben oder sehr hohe Kosten verursachen und technisches Personal und Knowhow nicht vorhanden oder schwierig bereitzustellen ist. Ferner sind häufig langwierige behördliche Genehmigungsprozeduren zu durchlaufen.

Der Erfindung liegt die Aufgabe zugrunde, eine Brauereianlage, insbesondere kleintechnische Anlage, zu schaffen, die komplett mobil einsetzbar ist.

Diese Aufgabe wird durch die Merkmale des Patentanspruchs 1 gelöst.

Die Erfindung sieht vor, daß die Brauereianlage mit den für die Wasseraufbereitung, das Sudwerk, die Gär- und Lagertanks sowie sonstigen für die Bierbereitung erforderlichen Einrichtungen in einem Schwimmkörper angeordnet ist. Der Schwimmkörper ist vorzugsweise ein angetriebenes Schiff, das gemäß einer Ausgestaltung der Erfindung vorzugsweise seetüchtig ist. Der Schwimmkörper kann auch von einem Schiff oder Schlepper geschleppt werden.

Wegen der Anordnung auf einem Schwimmkörper, insbesondere einem seetüchtigen Schiff, kann die Brauereianlage an einem günstigen Standort errichtet werden, wobei das Schiff zugleich Gasträume enthalten kann zum Ausschank des Bieres, wie dies bei sogenannten Hausbrauereien der Fall ist. Die Erfindung hat den Vorteil, daß die Brauereianlage entsprechend den touristischen Saisonschwerpunkten eingesetzt werden und den Ort wechseln kann, wenn er z.B. touristisch uninteressant ist. Die Anordnung auf einem Schiff hat ferner den Vorteil, daß es in Regionen, in denen Grundstücke nur zu sehr hohen Preisen zu erwerben sind, lediglich an einem geeigneten, kostengünstigeren Liegeplatz verankert werden kann. An derartigen Liegeplätzen herrscht vielerorts kein Mangel.

Die erfindungsgemäße Brauereianlage wird vorzugsweise unter Deck angeordnet, vorzugsweise in einem unteren Deck, soweit mehrere Decks vorhanden sind. Es versteht sich, daß für das Sudwerk Kamine bzw. Abzüge erforderlich sind. Diese werden vorzugsweise nach oben über das Oberdeck hinausgeführt.

Nach einer Ausgestaltung der Erfindung wird das Sudwerk mittschiffs angeordnet bzw. auf der Längsachse des Schwimmkörpers, um die Lage des Schiffes nicht zu beeinträchtigen. Die erforderlichen Gär- bzw. Lagerbehälter werden auf gegenüberliegenden Seiten des Schwimmkörpers angeordnet. Die Gewichte der Behälter auf den gegenüberliegenden Seiten gleichen sich annähernd aus, so daß besondere Trimmprobleme für das Schiff nicht entstehen.

Der freibleibende Raum zwischen den Anlagenteilen unter Deck kann als Gastraum genutzt werden, wobei nach einer Ausgestaltung der Erfindung eine das Sudwerk umgebende Wand zumindest teilweise durchsichtig ist. Der Anblick von kupferner Würz- und Maischepfanne kann eine optische Bereicherung des Gastraumes darstellen. Bei Vorhandensein eines Zwischendecks kann dieses nahezu vollständig als Gastraum genutzt werden, ebenso wie das Oberdeck, wenn dies die Witterung zuläßt.

Die erfindungsgemäße Brauereianlage kann vollständig autonom betrieben werden, d.h. auch eine eigene Energieversorgung und Wasseraufbereitung haben. Für die Wasseraufbereitung kann eine Meerwasser-Entsalzungsanlage vorgesehen werden. Die Erfindung ermöglicht das Brauen von Bier mit hoher gleichbleibender Qualität auch in Ländern, in denen das Know-how, technisches Personal und andere Bedingungen nur schwer erworben und bereitgestellt werden können.

Zusätzlich zu einer Brauereianlage kann auch eine Anlage zum Abfüllen des Biers in Fässer, Flaschen, Dosen usw. vorgesehen werden. Der Vertrieb des abgefüllten Biers erfolgt ab Schiff z.B. in das Land, zu dem der Liegeplatz gehört. Ferner können Vorkehrungen zur Herstellung von anderen Getränken, wie Fruchtsäften und Limonaden oder von alkoholischen Getränken, wie Spirituosen getroffen werden. Für den letzteren Fall ist eine Brennereianlage auf dem Schiff zu installieren.

Ein Ausführungsbeispiel der Erfindung wird nachfolgend anhand von Zeichnungen näher erläutert.
- Fig. 1: zeigt die Seitenansicht eines Schiffes mit Brauereianlage nach der Erfindung bei fortgelassener Außenwand.
- Fig. 2: zeigt eine Draufsicht auf die Darstellung nach Fig. 1 unter Deck.

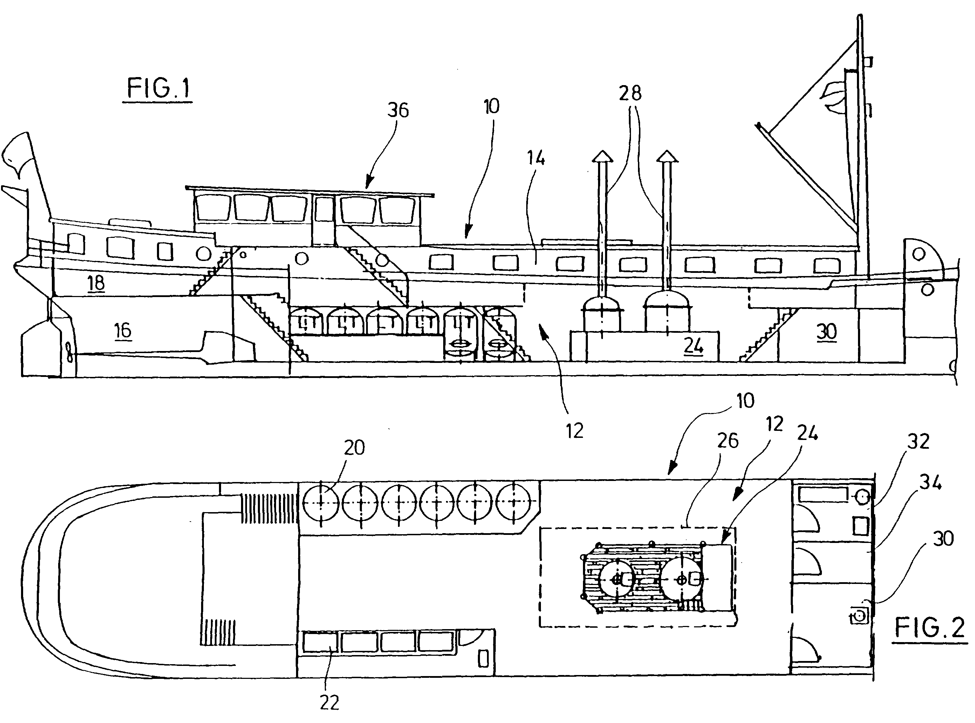

In Fign. 1 und 2 ist ein Schiff 10 angedeutet, das ein unteres Deck 12 sowie ein Zwischendeck 14 aufweist. Im unteren Deck 12 befindet sich achtern ein Motorraum 16, in dem auch Hilfsaggregate angeordnet sind. Oberhalb des Motorraums befindet sich eine Kombüse 18. Weiter nach vorn sind auf gegenüberliegenden Seiten des unteren Decks 12 sechs Lagertanks 20 und vier Gärbottiche 22 angeordnet. Annähernd mittschiffs befindet sich im unteren Deck 12 ein Sudwerk 24. Wie durch die gestrichelte Linie 26 angedeutet, kann es von einer Wand umgeben sein, die zumindest teilweise durchsichtig sein kann. Von der Maische- bzw. Würzpfanne des Sudwerks 24 sind zwei Abzüge 28 nach oben durch das Zwischendeck 14 über das Hauptdeck gezogen.

Im Vorschiff sind eine Mühle 30 sowie ein Raum 32 für Lufttank und Luftkompressor angeordnet und einem Raum 34 als Braumeisterbüro. Der Raum 30 kann auch Malzlager sein.

Die übrigen Räume (nicht bezeichnet) im Deck 12 können als Gasträume ausgestattet werden. Auch das Zwischendeck 14 kann nahezu komplett als Gastraum ausgeführt werden mit Ausnahme des Steuerhauses 36.

Die gezeigte Brauereianlage kann auch eine Wasseraufbereitungsanlage, insbesondere eine Meerwasserentsalzungsanlage, enthalten, um Brauwasser in der gewünschten Qualität unabhängig von externen Wasserquellen zur Verfügung zu haben.

Das gezeigte Schiff kann an einem beliebigen Liegeplatz verankert werden und als Restaurant bzw. sonstiges Etablissement, in dem Bierverzehr stattfindet, verwendet werden. Daneben oder alternativ kann eine Abfüllung in einer geeigneten Anlage an Bord erfolgen in Flaschen, Fässer, Dosen usw. zwecks Vertrieb nach außerhalb. Die gesamte Brauereianlage ist autonom und ortsungebunden, wird jedoch in herkömmlicher Weise betrieben.

Um unabhängig von Wellenbewegungen und Schiffslage eine einwandfreie Produktion zu gewährleisten, können alle wesentlichen Teile der Brauereianlage so gelagert sein, daß sie stets vertikal bzw. horizontal ausgerichtet bleiben, z.B. durch eine kardanische Lagerung.

## Patentansprüche

1. Schwimmkörper, dadurch gekennzeichnet, daß er eine Brauereianlage enthält, insbesondere eine kleintechnische Anlage, mit einer Wasseraufbereitungsvorrichtung, einem Sudwerk (24), Gär- und Lagertanks (22, 20) sowie sonstigen für die Bearbeitung erforderlichen Einrichtungen.

2. Schwimmkörper nach Anspruch 1, dadurch gekennzeichnet, daß er ein angetriebenes Schiff (10) ist.

3. Schwimmkörper nach Anspruch 2, dadurch gekennzeichnet, daß er ein seetüchtiges Schiff (10) ist.

4. Schwimmkörper nach einem der Ansprüche 1 bis 3, dadurch gekennzeichnet, daß die Anlagenteile (20, 22, 24) in einem unteren Deck (12) des Schwimmkörpers (10) angeordnet sind.

5. Schwimmkörper nach einem der Ansprüche 1 bis 3, dadurch gekennzeichnet, daß das Sudwerk (24) mittschiffs angeordnet ist.

6. Schwimmkörper nach einem der Ansprüche 1 bis 4, dadurch gekennzeichnet, daß das Sudwerk (24) auf der Längsachse des Schwimmkörpers (12) angeordnet ist.

7. Schwimmkörper nach einem der Ansprüche 1 bis 6, dadurch gekennzeichnet, daß die Lagerbehälter (20) und/oder die Gärbehälter (22) an den Längsseiten des Schwimmkörpers angeordnet sind.

8. Schwimmkörper nach einem der Ansprüche 4 bis 7, dadurch gekennzeichnet, daß der freibleibende Raum zwischen den Anlagenteilen und das darüberliegende Deck (14) als Gasträume ausgebildet sind.

9. Schwimmkörper nach einem der Ansprüche 1 bis 8, dadurch gekennzeichnet, daß das Sudwerk (24) von einer Wand (26) umgeben ist, die zumindest teilweise durchsichtig ist.

10. Schwimmkörper nach einem der Ansprüche 1 bis 9, dadurch gekennzeichnet, daß ferner eine Meerwasserentsalzungsanlage auf dem Schwimmkörper angeordnet ist.

11. Schwimmkörper nach einem der Ansprüche 1 bis 10, dadurch gekennzeichnet, daß eine Bier-Abfüllanlage auf dem Schwimmkörper vorgesehen ist.

12. Schwimmkörper nach einem der Ansprüche 1 bis 11, dadurch gekennzeichnet, daß er eine zusätzliche Produktionsanlage für andere Getränke enthält.

13. Schwimmkörper nach einem der Ansprüche 1 bis 11, dadurch gekennzeichnet, daß die lageempfindlichen Teile der Brauereianlage so gelagert sind, daß sie unabhängig von der Lage des Schwimmkörpers ihre Orientierung weitgehend beibehalten.

## Claims

1. Buoyant body, characterized in that it contains a brewery installation, in particular a small-sized brewery installation including water conditioner means, brewing means, the tanks (24, 22, 20) for fermentation and storing and other means necessary to produce beer.

2. The buoyant body of claim 1, wherein it is a driven ship.

3. The buoyant body of claim 2, wherein the ship (10) is seaworthy.

4. The buoyant body of one of the claims 1 to 3, wherein the components (20, 22, 24) of the installation are located in a lower deck (12) of the buoyant body (10).

5. The buoyant body of one of the claims 1 to 3, wherein the brewing means (24) are located in the center of the buoyant body.

6. The buoyant body of one of the claims 1 to 4, wherein the brewing means (24) are located on the longitudinal axis of the buoyant body (12).

7. The buoyant body of one of the claims 1 to 7, wherein the storage tanks (20) and/or the fermentation tanks (22) are located at opposite sides of the buoyant body.

8. The buoyant body of one of the claims 4 to 7, wherein the remaining space between the installation components and the deck (14) above thereof are defined as guest rooms.

9. The buoyant body of one of the claims 1 to 8, wherein the brewing means (24) are surrounded by wall (26) which is at least partially transparent.

10. The buoyant body, wherein further a desalination means is located on the buoyant body.

11. The buoyant body of one of the claims 1 to 10, wherein a beer dispensing installation is located on the buoyant body.

12. The buoyant body of one of the claims 1 to 11, wherein additional production means are located on the buoyant body for making other beverages.

13. The buoyant body of one of the claims 1 to 11, wherein components of the brewery installation which are sensitive against changes of their position are supported in the buoyant body such that they are maintained substantially independent from the orientation of the buoyant body.

## Revendications

1. Corps flottant, caractérisé en ce qu'il contient une installation de brasserie, en particulier une installation industrielle miniature, avec un dispositif de préparation de l'eau, avec un atelier de brassage (24), des réservoirs de fermentation et de stockage (22, 20), ainsi que d'autres équipements nécessaires pour la fabrication.

2. Corps flottant selon la revendication 1, caractérisé en ce qu'il est un navire (10) propulsé.

3. Corps flottant selon la revendication 2, caractérisé en ce qu'il est un navire (10) pouvant naviguer à la voile.

4. Corps flottant selon l'une des revendications 1 à 3, caractérisé en ce que les parties d'installation (20, 22, 24) sont disposées dans un pont inférieur (12) du corps flottant (10).

5. Corps flottant selon l'une des revendications 1 à 3, caractérisé en ce que l'atelier de brassage (24) est disposé au centre du navire.

6. Corps flottant selon l'une des revendications 1 à 4, caractérisé en ce que l'atelier de brassage (24) est disposé sur l'axe longitudinal du corps flottant (12).

7. Corps flottant selon l'une des revendications 1 à 6, caractérisé en ce que les réservoir de stockage (20) et/ou les réservoirs de fermentation (22) sont disposés sur les côtés longitudinaux du corps flottant.

8. Corps flottant selon l'une des revendications 4 à 7, caractérisé en ce que l'espace restant libre, entre les parties d'installation et le pont (14) de niveau supérieur, sont réalisées sous la forme d'espaces pour les passagers.

9. Corps flottant selon l'une des revendications 1 à 8, caractérisé en ce que l'atelier de brassage (24) est entouré par une paroi (26) qui est au moins partiellement transparente.

10. Corps flottant selon l'une des revendications 1 à 9, caractérisé en ce qu'en outre sur le corps flottant est disposée une installation de désalement de l'eau de mer.

11. Corps flottant selon l'une des revendications 1 à 10, caractérisé en ce qu'une installation de conditionnement/remplissage de bière est prévue sur le corps flottant.

12. Corps flottant selon l'une des revendications 1 à 11, caractérisé en ce qu'il contient une installation de production supplémentaire pour d'autres boissons.

13. Corps flottant selon l'une des revendications 1 à 11, caractérisé en ce que les parties, sensibles quant à leur position, de l'installation de brasserie sont placées de manière qu'elles conservent notablement leur orientation, indépendamment de la position prise par le corps flottant.
